# EUROPÄISCHE PATENTSCHRIFT

(11) **EP 2 927 711 B1**
(45) Veröffentlichungstag und Bekanntmachung des Hinweises auf die Patenterteilung: **30.03.2016**
(21) Anmeldenummer: 14163500.3
(22) Anmeldetag: 04.04.2014
(51) Int. Cl.: G01S 17/02, G01S 7/42, G01S 7/481, G01S 7/497, G01S 7/491, G01S 17/42

(54) **Laserscanner und Verfahren zur sicheren Erfassung von Objekten**
Laser scanner and method for the reliable detection of objects
Lecteur laser et procédé de saisie sécurisée d'objets

(43) Veröffentlichungstag der Anmeldung: 07.10.2015
(73) Patentinhaber: SICK AG, 79183 Waldkirch (DE)
(72) Erfinder: Hammes, Dr. Markus, 79117 Freiburg (DE)
(74) Vertreter: Hehl, Ulrich

(56) Entgegenhaltungen:
- DE-A1- 4 340 756
- DE-B3-102012 102 395
- DE-B3-102012 112 987

## Beschreibung

Die Erfindung betrifft einen Laserscanner und ein Verfahren zur sicheren Erfassung von Objekten nach dem Oberbegriff von Anspruch 1 beziehungsweise 15.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

Sicherheitslaserscanner müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

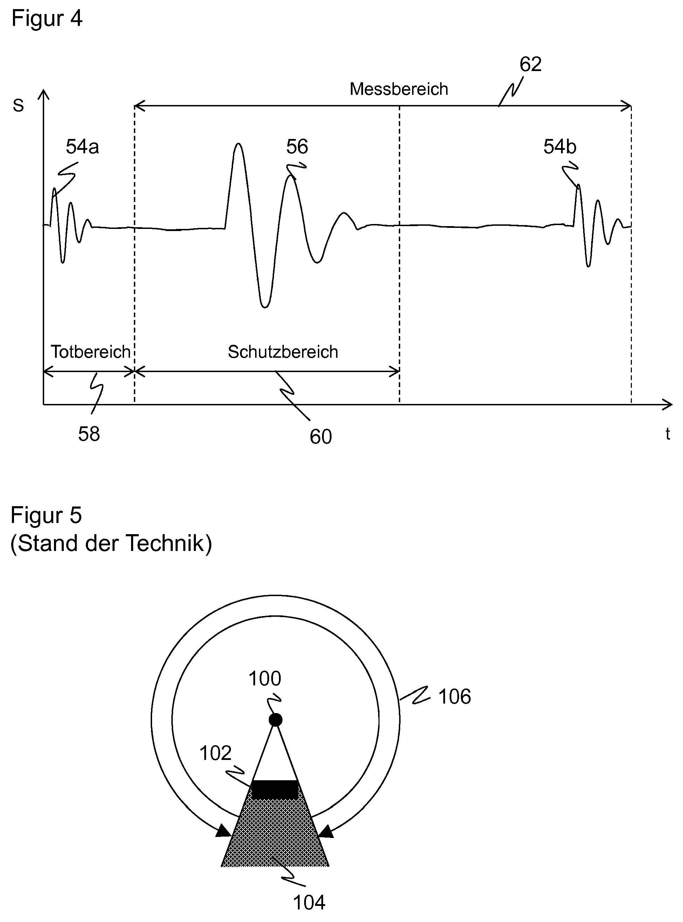

Eine dieser Maßnahmen, die einen Laserscanner zu einem Sicherheitslaserscanner machen, ist die Verwendung eines internen Referenzzielsystems, mit dessen Hilfe die fehlerfreie Funktion der Abstandsmessung und deren unbeeinträchtigte Empfindlichkeit überprüft werden. Figur 5 zeigt in schematischer Draufsicht einen derartigen herkömmlichen Sicherheitslaserscanner 100 mit einem Referenzziel 102. Dieses Referenzziel 102 wird in jedem Umlauf der Ablenkeinheit optisch angetastet und das Signalecho im Hinblick auf Signalstärke und Abstandswert ausgewertet. Der Vergleich dieser Messung mit einem eingelernten Erwartungswert erlaubt die Beurteilung, ob die Detektionsfähigkeit des Sicherheitslaserscanners eingeschränkt ist. Zudem kann aus dieser Messung ein aktueller Abstandsoffset ermittelt und korrigiert werden, der durch temperaturabhängige interne Signallaufzeitschwankungen verursacht wird.

Diese Überwachungs- und Korrekturfunktion kann nur wahrgenommen werden, wenn das Referenzzielsignal unabhängig von äußeren Begebenheiten wie Fremdlicht, Verschmutzung und Hintergrundremissionen ist. Diese Abgrenzung gegen Umwelteinflüsse wird im Stand der Technik dadurch erreicht, dass ein zusammenhängender Winkelbereich 104 des Sichtbereichs exklusiv für die Referenzzielmessung verwendet wird. In dem Winkelbereich 104 befindet sich auch der Träger, an dem die Ablenkeinheit mit Motor, Drehspiegel und Winkelencoder aufgehängt ist. Auch das Referenzziel 102 wird an dem Träger befestigt.

Der Vorteil der herkömmlichen Umsetzung ist die Möglichkeit einer durchgängigen Systemtestung mit Hilfe des eigentlichen Messsystems. Der Nachteil dieses Designs ist die Reduktion des nutzbaren Sichtbereichs, weil der Träger mit dem Referenzziel 104 den optischen Strahlweg nach außen blockiert. Dadurch wird der Sichtbereich 106 auf etwa 270° eingeschränkt. Anwendungen, in denen ein größerer Sichtbereich 106 überwacht werden soll, können deshalb nur durch mindestens zwei Sicherheitslaserscanner abgedeckt werden. Dabei ist die in Figur 5 dargestellte Situation mit einer Totzone im Winkelbereich 104 sogar noch zu optimistisch dargestellt. Je kompakter der Sicherheitslaserscanner gebaut wird, desto schwieriger wird es, einen so schmalen Winkelbereich 104 als Totzone zu verwirklichen oder überhaupt nur eine Reduktion um lediglich etwa 90° zu erreichen.

Aus der EP 2 482 094 B1 ist ein Laserscanner bekannt, bei dem das Test- oder Referenzziel nicht in der Scanebene liegt, wobei der Scanstrahl mit Hilfe einer Umlenkeinheit aus der Scanebene heraus zu dem Testziel geführt wird. In einer Ausführungsform bildet die Innenfläche einer gekrümmten Frontscheibe die Umlenkeinheit. Die Umlenkeinheit schattet aber den Winkelbereich des Testziels genauso ab wie der oben beschriebene Träger. Im Falle der Ausführungsform, in der die Frontscheibe die Umlenkeinheit bildet, wird sie in diesem Winkelbereich eigens verspiegelt. Damit löst diese Anordnung das Problem der Totzone nicht.

Aus der DE 10 2012 112 987 B3 ist ein Laserscanner bekannt, der einen Zeitverlauf seines jeweiligen Empfangssignals speichert und daraus sowohl Informationen über den Objektabstand angetasteter Objekte als auch eine Sichttrübung bestimmt.

Die DE 10 2012 102 395 B3 offenbart einen Laserscanner mit einer auch in Höhenrichtung gekrümmten Frontscheibe, die mit Hilfe mehrerer Testlichtsender und Testlichtempfänger auf Lichtdurchlässigkeit überprüft wird. Dabei werden Testlichtpfade genutzt, die eine Reflexion an einer Innenseite der Frontscheibe einschließen.

Die DE43 40 756 A1 beschreibt einen Sicherheitslaserscanner mit einem internen Testziel.

Es ist deshalb Aufgabe der Erfindung, einen Laserscanner mit verbessertem Testen des Signalpfads anzugeben.

Diese Aufgabe wird durch einen Laserscanner und ein Verfahren zur sicheren Erfassung von Objekten nach Anspruch 1 beziehungsweise 15 gelöst. Ein Laserscanner weist eine bewegliche Ablenkeinheit auf, also beispielsweise einen rotierenden Optikkopf mit Lichtsender und Empfänger oder einen rotierenden Drehspiegel, und tastet auf diese Weise periodisch eine Scanebene ab. Bei zusätzlicher Verkippung der Ablenkeinheit wird der Überwachungsbereich zu einem dreidimensionalen Raumbereich. Der Laserscanner testet möglichst den vollständigen Signalpfad einschließlich der Auswertung und wird dadurch zu einem sicheren Laserscanner mit Überprüfung seiner Funktion. Die Erfindung geht nun von dem Grundgedanken aus, Objekte auch in Winkelstellungen zu erfassen, in denen der Signalpfad getestet wird. Das ist bei herkömmlichen sicheren Laserscannern strikt getrennt: Es gibt den Sichtbereich von etwa 270° und einen Totbereich, in dem mittels Referenzziel der Test erfolgt, das Lichtsignal den Laserscanner aber nicht verlässt und somit keine Objekte erfassen kann. Erfindungsgemäß gibt es diesen Totbereich nicht. Damit erfordert der Test des Signalpfads keine Einschränkung des Sichtfeldes.

Die Erfindung hat den Vorteil, dass der herkömmliche Widerspruch zwischen der Forderung nach einem 360°-Sichtbereich und eines sicherheitstechnisch erforderlichen Referenzsignals zur Überwachung der Detektionsfähigkeit aufgelöst wird. Es wird eine interne Testung des Signalpfades ohne Reduktion des Sichtbereichs ermöglicht. Damit können sichere Laserscanner ein Sichtfeld von bis zu 360° erreichen.

Der Laserscanner weist bevorzugt einen Testlichtsender zum Erzeugen eines Testlichtsignals auf, wobei der Testlichtsender derart ausgerichtet ist, dass das Testlichtsignal innerhalb des Laserscanners direkt oder über ein streuendes Objekt innerhalb des Gehäuses oder über die Ablenkeinheit zu dem Lichtempfänger gelangt. Das Testlichtsignal ersetzt empfangsseitig das Signal des herkömmlichen Referenzziels. Als aktive und von dem Messsystem unabhängige Signalquelle besteht die Freiheit, das Testlichtsignal sowohl in seinem Zeitverhalten wie in seiner Signalform beliebig zu gestalten. Das Testlichtsignal bleibt intern, es verlässt den Laserscanner nicht und wird deshalb auch nicht durch Umwelteinflüsse verfälscht.

Der Testlichtsender ist bevorzugt derart ausgerichtet, dass das Testlichtsignal zusätzlich innen an einer Frontscheibe des Laserscanners reflektiert wird. Der Testlichtpfad führt hier also zusätzlich über die Frontscheibe und dann direkt oder nochmals über die Ablenkeinheit in den Lichtempfänger. Das Testlicht löst einen Frontscheibenreflex aus, der dann als Testlichtsignal ausgewertet wird. Vorzugsweise ist der Auftreffwinkel auf der Frontscheibe flach genug, dass ein Großteil des Testlichts oder durch Totalreflexion das gesamte Testlicht intern reflektiert wird. Es ist auch denkbar, die Frontscheibe am Auftreffort des Testlichts zu verspiegeln, indem dieser Auftreffort durch entsprechenden Kippwinkel des Testlichtsenders einen vertikalen Versatz zu dem Durchtrittsort des Lichtsignals der Messung aufweist.

Die Auswertungseinheit ist bevorzugt dafür ausgebildet, ein Testlichtsignal des Testlichtsenders zu einem Zeitpunkt auszulösen, bei dem das Testlichtsignal in dem Empfangssignal zeitlich versetzt zu dem Lichtsignal erfasst wird. Damit findet keine störende Überlagerung von Testlichtsignal und Messsignal in dem Empfangssignal statt. Messung und Test sind zeitlich entkoppelt, und sowohl Test als auch Messung sind in derselben Messperiode bei gleicher Winkelstellung der Ablenkeinheit möglich.

Der Zeitpunkt entspricht bevorzugt einem zeitlichen Totbereich am Anfang oder Ende einer Messung. Das stellt von vorneherein sicher, dass keine Überlagerung mit einem relevanten Messsignal stattfinden kann. Ein erster zeitlicher Totbereich ergibt sich im extremen Nahbereich am Anfang jeder Messperiode durch elektronische interne Signallaufzeiten oder optische Signallaufzeiten, die Abständen noch innerhalb des Laserscanners entsprechen. Ein zweiter zeitlicher Totbereich entspricht entweder einer Totzeit zwischen zwei Messungen oder, wenn Messungen unmittelbar aufeinanderfolgen, ab einer Entfernung, die jenseits des Messbereichs oder zwar noch im Messbereich, jedoch nicht mehr in einem spezifizierten Abstand liegt, wo Schutzfelder konfiguriert werden können.

Die Auswertungseinheit ist bevorzugt dafür ausgebildet, den Zeitpunkt im Verlauf der Bewegung der Ablenkeinheit dynamisch anzupassen. Beispielsweise wird der Test an einen Zeitpunkt im Empfangssignal verlegt, bei dem nach einer vorigen Messung oder für einen benachbarten Winkel kein Objekt liegt. Denkbar ist auch ein Wechsel zwischen dem ersten nahen und dem zweiten fernen zeitlichen Totbereich. Die dynamische Anpassung des Zeitpunkts kann auch dazu dienen, die Auswertung der Laufzeitmessung zu testen, denn ein veränderter Zeitpunkt muss in einem fehlerfreien System genau zu einer erwarteten Änderung der Laufzeit führen.

Die Auswertungseinheit ist bevorzugt dafür ausgebildet, die Amplitude des Testlichtsignals zu variieren. Dadurch werden beispielsweise helle und dunkle Ziele mit hoher oder niedriger Remission simuliert, die sowohl sicher als auch im richtigen Abstand erfasst werden müssen.

Der Laserscanner weist bevorzugt einen A/D-Wandler und einen Speicher auf, um das Empfangssignal zu digitalisieren und für eine nachfolgende Auswertung aufzuzeichnen. In dem zeitaufgelösten digitalen Signal können Stör- und Nutzsignale getrennt, der Empfangszeitpunkt und damit die Lichtlaufzeit bestimmt und das Test- von dem Messsignal getrennt werden.

Die Auswertungseinheit ist bevorzugt dafür ausgebildet zu testen, ob das Testlichtsignal mit einer erwarteten Mindestamplitude und/oder in einer erwarteten Winkelposition der Ablenkeinheit empfangen wird. Über die Amplitude werden Beeinträchtigungen im optischen System, also beispielsweise der Ablenkeinheit oder Empfangsoptik durch Effekte wie Kondensation, Korrosion oder Dejustage, sowie der Verstärkung des Lichtempfängers oder von dessen nachgeschalteter Analogelektronik erkannt. Das Testsignal wird außerdem in bestimmten Winkelstellungen erwartet, woran eine fehlende Übereinstimmung zwischen dem Encoder zur Winkelpositionsbestimmung und der tatsächlichen Winkelstellung erkannt wird.

Der Laserscanner weist bevorzugt einen Testlichtempfänger auf, welcher derart angeordnet ist, dass darin direkt oder nach Reflexion an einer Frontscheibe des Laserscanners ein Teil des Lichtsignals empfangen wird. Die bisher genannten Tests beziehen sich auf den Empfangspfad. Mit dem Testlichtempfänger wird nun auch der Sendepfad getestet. Dazu wird insbesondere ein Frontscheibenreflex des Lichtsignals des eigentlichen Lichtsenders ausgewertet. Damit kann zugleich eine Verschmutzung der Frontscheibe geprüft werden. Das wäre ohnehin für einen sicheren Laserscanner erforderlich, so dass über eine Doppelfunktion der Lichtsender ohne apparativen Zusatzaufwand getestet werden kann.

Der Laserscanner weist bevorzugt eine Sockeleinheit und eine von einer Frontscheibe getragene Deckeleinheit auf, wobei die Ablenkeinheit in der Deckeleinheit gehaltert ist. Herkömmlich dient zur mechanischen Halterung ein Träger in dem rückwärtigen Totwinkelbereich der Ablenkeinheit. Das ist nicht mehr möglich, wenn ein Sichtbereich von bis zu 360° erreicht werden soll. Deshalb wird stattdessen die Frontscheibe zu einem tragenden Element und der Motor von oben her gehalten. Auch der Testlichtsender kann in der Deckeleinheit neben dem Motor untergebracht werden. Alternativ dazu, den Motor von oben her abzustützen, können auch dünne Halterungselemente von unten her geführt werden. Diese Halterungselemente könnten zwar von dem Abtaststrahl erfasst werden, liegen innerhalb des Laserscanners und damit zwingend außerhalb relevanter Schutzfelder, wodurch sie zuverlässig und einfach ausgeblendet werden. Damit ergibt sich nur ein gewisser energetischer Verlust, aber keinesfalls eine Fehlmessung. Selbstverständlich ist es möglich, die Konstruktion umzudrehen, dann steht die Sockeleinheit oben und die Deckeleinheit wird trotz des in diesem Falle wenig einleuchtenden Begriffs zu einer Bodeneinheit. Die Orientierung des Laserscanners hängt ohnehin von der Montage am Ort der Anwendung ab.

Der Laserscanner ist bevorzugt als Entfernungsmesser ausgebildet, indem die Auswertungseinheit dafür ausgebildet ist, die Lichtlaufzeit zwischen Aussenden und Empfang des Lichtsignals und daraus die Entfernung eines Objekts zu bestimmen. Damit können wesentlich genauere Objektinformationen gewonnen werden als durch bloße Feststellung der Anwesenheit von Objekten. Vorzugsweise ist eine Winkelmesseinheit zur Erfassung der Winkelstellung der Ablenkeinheit vorgesehen. Insgesamt stehen dann für erfasste Objekte vollständige zweidimensionale Positionskoordinaten zur Verfügung. Im Falle eines räumlich ausgedehnten Überwachungsbereichs wird auch der jeweilige Kippwinkel der Abtasteinheit erfasst, so dass insgesamt dreidimensionale Kugelkoordinaten erhalten werden, welche die Objektposition innerhalb des Überwachungsbereichs ebenfalls vollständig beschreiben.

Die Auswertungseinheit ist bevorzugt dafür ausgebildet, die Lichtlaufzeit anhand eines Zeitpunkts zu korrigieren, zu dem das Testlichtsignal empfangen wird. Das dient beispielsweise der temperaturabhängigen Korrektur der Lichtlaufzeit. Der Pfad des Testlichts wird zu einem optischen Referenzpfad der Lichtlaufzeitmessung. Sollen nur die elektrischen Laufzeiten korrigiert werden, kann alternativ ein elektrisches Testsignal eingespeist werden.

Der Laserscanner ist bevorzugt als Sicherheitslaserscanner ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Ein Sicherheitslaserscanner ist ein sicherer Laserscanner im Sinne einer Sicherheitsnorm wie einleitend beschrieben und kann deshalb insbesondere zum Personenschutz an Gefahrenquellen eingesetzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform eines Laserscanners;
- Fig. 2: eine schematische Schnittdarstellung einer weiteren Ausführungsform eines Laserscanners;
- Fig. 3: eine Darstellung des zu testenden Signalpfads in einem Laserscanner;
- Fig. 4: ein beispielhaftes zeitaufgelöstes Empfangssignal zur Erläuterung der zeitlichen Entkopplung von Messsignal und Testsignal insbesondere mit Hilfe zeitlicher Totbereiche; und
- Fig. 5: eine schematische Draufsicht auf den Überwachungsbereich eines herkömmlichen Laserscanners mit Totzone über einen zusammenhängenden Winkelbereich.

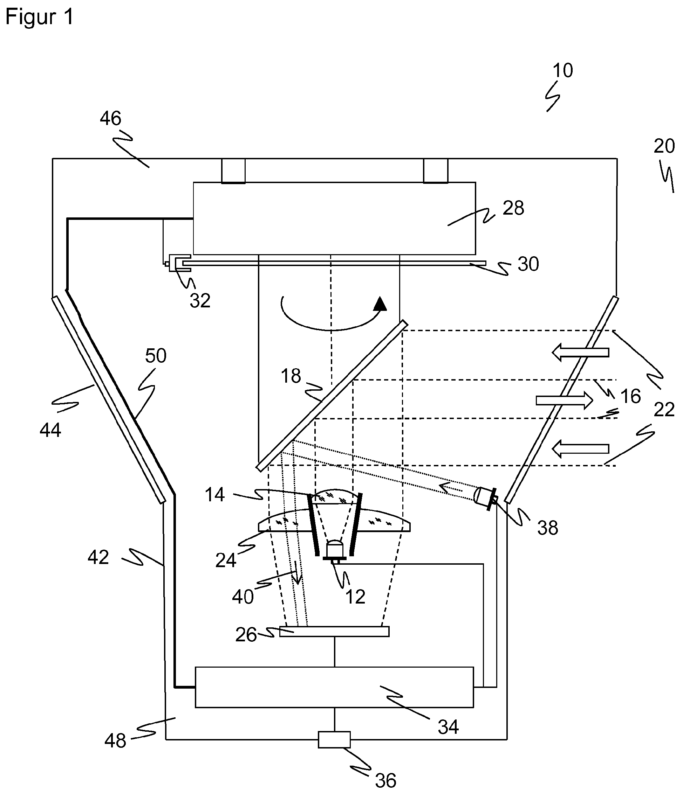

Fig. 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Diese Auswertung erfolgt in einer Auswerteeinheit 34, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 34, ob ein unzulässiges Objekt in einen innerhalb des Überwachungsbereichs 20 festgelegten Schutzbereich eingreift. Ist das der Fall, wird über einen Sicherheitsausgang 36 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner.

Eine dieser sicherheitstechnischen Maßnahmen ist ein Test des Signalpfades anhand eines Testlichtsignals. Dafür ist ein Testlichtsender 38 vorgesehen, der ein Testlichtsignal 40 direkt oder wie in Figur 1 dargestellt nach Reflexion an der Ablenkeinheit 18 in den Lichtempfänger 26 einstrahlen kann.

Alle genannten Funktionskomponenten sind in einem Gehäuse 42 angeordnet, das im Bereich des Lichtaus- und Lichteintritts eine Frontscheibe 44 aufweist.

Die Ablenkeinheit 18 wird in dem Laserscanner 10 von oben her in Drehbewegung versetzt. Es ist kein Träger auf Höhe des Lichtaus- und Lichteintritts erforderlich, so dass es auch keinen Winkelbereich einer Totzone gibt, in dem der Träger oder ein Referenzziel den Sendelichtstrahl 16 beziehungsweise das remittierte Licht 22 abschattet.

Stattdessen wird der Motor 28 von einer Deckeleinheit 46 des Gehäuses 42 gehalten. Dadurch hat die Frontscheibe 44 eine tragende Funktion für die Aufhängung der Ablenkeinheit 18, sie hält nämlich die Deckeleinheit 46 gegenüber einer Sockeleinheit 48 des Gehäuses 42.

Auf diese Weise hat der Laserscanner 10 einen Sichtbereich von bis zu 360°. Es müssen bei 360°-Rundumsicht Leitungen 50 zur Stromversorgung des Motors 28 und Übertragung des Winkelsignals des Encoders 32 durch den Beleuchtungsbereich des Sendelichtstrahls 16 geführt werden. Eine drahtlose Übertragung und Versorgung ist prinzipiell denkbar, aber sehr aufwändig. Solange die Leitungen 50 außerhalb des mechanischen Drehbereichs der Ablenkeinheit 18 geleitet und mit sehr kleinem Durchmesser und geschwärzt ausgeführt werden, ist das auch nicht erforderlich. Denn dann bringen die Leitungen 50 lediglich eine gewisse Energiereduktion beziehungsweise geringfügige energetische Signaldämpfung mit sich, aber keine Sichtbereichseinschränkung. Eine Fehlmessung von Nahbereichsechos als Objekt in einem Schutzbereich ist ausgeschlossen, da die Entfernung zu gering und noch innerhalb des Laserscanners 10 gemessen würde. Solche nahen Erfassungen können in einer Nahbereichsunterdrückung der Auswertung oder schon optisch durch eine Nahbereichsblende unterdrückt werden.

Aus ähnlichen Überlegungen ist auch möglich, statt einer in Figur 1 illustrierten Aufhängung von Motor 28 und Ablenkeinheit 18 an der Deckeleinheit auch durch Halteelemente von unten her zu haltern. Wie die Leitungen 50, die im Übrigen an oder in den Halteelementen untergebracht werden könnten, sollten die Halteelemente schmal ausgeführt und schwarz angestrichen sein sowie gegebenenfalls im Schatten einer Nahbereichsblende liegen. Es ist alternativ denkbar, einen Hohlwellenmotor zu verwenden, aber aus Kostengründen sind die beschriebenen Ausführungsvarianten zu bevorzugen.

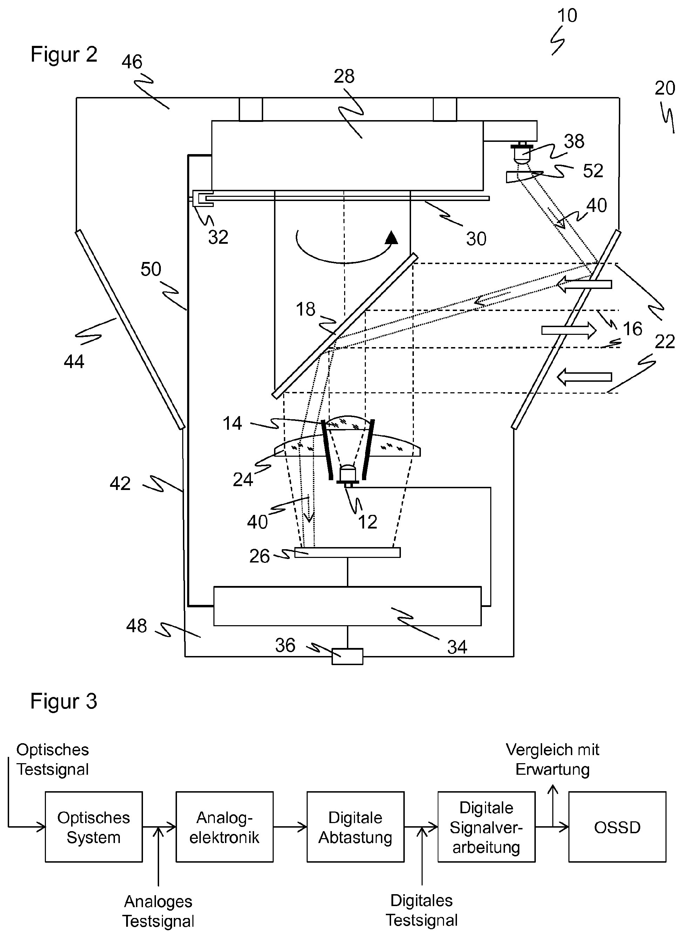

Figur 2 zeigt eine weitere Ausführungsform des Laserscanners 10. Dabei bezeichnen gleiche Bezugszeichen in der gesamten Beschreibung gleiche oder einander entsprechende Merkmale. Diese Ausführungsform unterscheidet sich von derjenigen in Figur 1 vor allem durch die Anbringung des Testlichtsenders 38 neben dem Motor 28. Das Testlichtsignal 40 wird aufgrund dieser Anordnung auf seinem Testlichtpfad zu dem Lichtempfänger 26 zusätzlich an der Innenseite der Frontscheibe reflektiert. Damit die Platine des Testlichtsenders 38 zu dessen Ausrichtung nicht verkippt werden muss, wird ein Ablenkprisma 52 vorgeordnet, welches zugleich kollimierend ausgebildet ist und damit eine Kollimationslinse ersetzt. Außerdem sind die Leitungen in der Ausführungsform gemäß Figur 2 direkt von oben nach unten und nicht an der Frontscheibe 44 angebracht. Durch die Unterschiede zwischen Figur 1 und 2 sollen Variationsmöglichkeiten illustriert werden, die auch anders kombinierbar sind. So kann ein Ablenkprisma 52 auch in der Ausführungsform gemäß Figur 1 zum Einsatz kommen, ebenso wie die Leitungen 50 wahlweise direkt oder an der Frontscheibe 44 geführt werden können.

Mit dem erfindungsgemäßen Laserscanner 10 lässt sich ein großer Sichtbereich von bis zu 360° realisieren, ohne dass auf die herkömmlich in einem Winkelbereich einer Totzone untergebrachte Referenzzielmessung zum Testen des Signalpfades verzichtet werden muss. Der Test des Signalpfads von Aussenden des Sendelichtstrahls 16 bis zum Bestimmen eines Abstands aus einer Lichtlaufzeit wird nun anhand der Figuren 3 und 4 näher erläutert.

Figur 3 zeigt eine Darstellung des zu testenden Signalpfads in einem Laserscanner. Diese Signalverarbeitungskette soll möglichst vollständig erfasst werden, idealerweise angefangen von dem Lichtsender 12 bis hin zum digitalen Messergebnis. Die verschiedenen Aspekte sollen mit möglichst wenigen Tests abgedeckt werden.

Zunächst kann mit einem optischen Test- oder Referenzsignal das optische System getestet werden, also insbesondere Lichtsender 12, Sendeoptik 14, Ablenkeinheit 18, Empfangsoptik 24 und Lichtempfänger 26. Der Rest der Signalkette könnte alternativ zu dem in dem Lichtempfänger 26 aus dem optischen Testsignal erzeugten Empfangssignal auch mit einem eingespeisten analogen Testsignal geprüft werden. So wird als nächstes die Analogelektronik geprüft, also beispielsweise ein Verstärker oder ein analoger Signalfilter. Anschließend erfolgt eine digitale Abtastung. Der erforderliche A/D-Wandler ist in den Figuren 1 und 2 als Teil der Auswertungseinheit 34 aufgefasst und dort nicht gesondert dargestellt. Nach der digitalen Abtastung steht das Empfangssignal als zeitaufgelöstes digitales Signal zur weiteren Auswertung zur Verfügung.

Wiederum könnte ab hier der Rest der Signalkette alternativ zu dem digitalisierten Empfangssignal des optischen Referenzsignals mit einem eingespeisten, nun digitalen Testsignal geprüft werden. Die digitale Signalverarbeitung bestimmt nach optionaler digitaler Vorverarbeitung einen Zeitpunkt, zu dem des Testsignals empfangen wurde, und daraus eine Signal- oder Lichtlaufzeit. Bei Betrachtung der Signalkette der Figur 3 wird deutlich, dass die bestimmte Signallaufzeit eine interne Komponente elektrischer Laufzeiten enthält, die durch Kalibration berücksichtigt werden muss. Diese Laufzeiten sind überdies temperaturabhängig. Eine entsprechende Drift kann aus der Laufzeit des Testsignals erkannt und damit kompensiert werden. Das optische System ist für solche Driften nicht anfällig, weil die Lichtlaufzeit nicht temperaturabhängig ist, deshalb genügt hier ein elektronischer Test.

Die Auswertungseinheit 34 hat eine Erwartungshaltung, wann das optische Referenzsignal bei fehlerfreier Funktion empfangen werden sollte, und kann so Fehler aufdecken. Falls die Funktion nicht sichergestellt ist, wird eine sicherheitsgerichtete Abschaltung über den Sicherheitsausgang 36 (OSSD) ausgelöst.

Die herkömmliche Referenzzielmessung in einem Winkelbereich einer Totzone kann die folgenden sechs Aufgaben erfüllen:

### Aufgabe des Referenzziels:

1. Überwachung der Verstärkung des Lichtempfängers 12
2. Überwachung der Verluste im optischen System
3. Vertikale Scanfeldveränderung (mechanische/thermische Einflüsse)
4. Verdrehung der Codescheibe 32 zum System
5. Ermittlung des temperaturabhängigen Offsets der Abstandsmessung
6. Überwachung der Laserleistung

Die gleichen Aufgaben können auch von dem erfindungsgemäßen Laserscanner 10 erfüllt werden, der aber keine Totzone aufweist. Diese Alternativen basieren meist, aber nicht zwingend auf dem Signal des Testlichtsenders 38. Das betrifft die empfangsseitigen Aufgaben 1-5, die sendeseitige Überprüfung der Laserleistung erfolgt mit einem zusätzlichen Lichtempfänger oder durch Mitnutzen eines Lichtempfängers, der für eine Verschmutzungsprüfung der Frontscheibe 44 ohnehin vorhanden ist:

### Alternative im Laserscanner 10:

1. Internes optisches Testsignal
2. Internes optisches Testsignal / Streulichtüberwachung
3. Internes optisches Testsignal / geänderter Frontscheibenreflex (gezieltes Ableiten macht gute Justage erforderlich) / Zyklisches Prüfen des Schutzfeldes mit Prüfstab
4. Internes optisches Testsignal / Formschluss der Bauteile / Zentrierpin / Verkleben
5. Internes optisches oder elektrisches Testsignal
6. Zusätzliche Empfangsdiode / Mitnutzen der Verschmutzungsmessung (Messung der mittleren cw-Leistung des inneren Frontscheibenreflexes)

Figur 4 zeigt ein beispielhaftes zeitaufgelöstes Empfangssignal zur Erläuterung einer vorteilhaften zeitlichen Entkopplung von Messsignal und Testsignal insbesondere mit Hilfe zeitlicher Totbereiche. Dadurch wird der Test des Signalpfades nicht mehr räumlich durch Winkelbereiche, sondern zeitlich von der eigentlichen Messung getrennt. Dafür werden Zeitbereiche genutzt, die entweder gar nicht für die Messung benötigt werden oder die zumindest sicherheitstechnisch nicht relevant sind.

In Figur 4 sind in dem Empfangssignal zwei Testsignale 54a-b und ein Messsignal 56 zu erkennen. Für den realen Test genügt ein Testsignal 54a-b, es sollen aber mehrere mögliche zeitliche Positionen illustriert werden. Es gibt hier noch eine Besonderheit, dass die Signale 54a-b, 56 mehrere Schwingungszyklen enthalten. Das entsteht bei einem besonderen Messverfahren, wie es beispielsweise in der einleitend genannten EP 2 482 094 B1 erläutert wird, bei dem der Empfangspuls einen Schwingkreis anstößt und sich dessen Abklingen in dem Empfangssignal zeigt. Die Dauer des Abklingens ist dann für die zeitliche Entkopplung mit zu berücksichtigen. Bei einem unmittelbar pulsbasierten Lichtlaufzeitverfahren wären die Signale 56a-b, 56 dementsprechend einfacher und schmaler. Dies unterstreicht insgesamt, dass die Erfindung nicht auf eine bestimmte Signalform festgelegt ist.

Solange sich Testsignal 54a-b und Messsignal 56 nicht überlagern, können getrennte Auswertungen für Test und Messung auf demselben Empfangssignal durchgeführt werden. Es gibt also keine Winkelstellungen der Ablenkeinheit 18, die exklusiv nur für den Test oder nur für die Messung verwendet würden, und daher auch keinen Winkelbereich einer Totzone.

Die Überlagerung von Testsignal 54a-b und Messsignal 56 lässt sich nun zuverlässig und einfach erreichen, indem entweder ein ohnehin vorhandener zeitlicher Totbereich 58 direkt nach dem Sendezeitpunkt verwendet wird, der sich aufgrund interner Signallaufzeiten ergibt oder noch extrem kurzen Abständen entspricht, die innerhalb des Laserscanners bleiben und deshalb mit keiner Messung kollidieren können. Alternativ kann eine Pause zwischen zwei Messungen oder, bei pausenloser Messung, ein zeitlicher Totbereich jenseits eines Schutzbereichs 60 verwendet werden. Dieser Totbereich liegt zwar noch innerhalb des Messbereichs 62, aber bereits zeitlich hinter der maximal spezifizierbaren Schutzfeldreichweite.

Die notwendige zeitliche Unabhängigkeit des Testsignals 54a-b von dem Messsignal 56 ist durch den eigenen Testlichtsender 38 gegeben. Das gesamte Empfangssignal, wie es beispielhaft in Figur 4 gezeigt ist, oder zumindest alle relevanten Informationen davon stehen der Auswertungseinheit 34 nach der digitalen Abtastung zur Verfügung.

Anstelle der beschriebenen zeitlichen Entkopplung sind auch andere Möglichkeiten vorstellbar, etwa eine spektrale Entkopplung, bei der Lichtsender 12 und Testlichtsender 38 unterschiedliche Frequenzen nutzen, oder Signalcodierungen.

Obwohl somit der Test des Signalpfades keinen Winkelbereich mehr blockiert, sind sämtliche der oben genannten sechs Aufgaben der herkömmlichen Referenzzielmessung erfüllbar. Prinzipiell stehen dafür verschiedene Möglichkeiten optischer und/oder elektronische Messungen und teilweise auch andere Maßnahmen zur Verfügung. Variationsmöglichkeiten ergeben sich beispielsweise durch die optische Anordnung, wie anhand Figur 1 und 2 illustriert, und die zeitliche Anordnung der Testsignale. Um eine zeitliche Abgrenzung zum Messsignal und zu Umwelteinflüssen zu erreichen, wird das Testsignal über den Testlichtsender 38 erzeugt und ist damit in Zeitverhalten und Signalform von dem Messsystem unabhängig.

Die Überwachung der Leistung des Lichtsenders 12 (Aufgabe 6) kann nicht mehr durch das Referenzzielsystem übernommen werden. Das ist unproblematisch, weil in Analogie zu herkömmlichen Verschmutzungsprüfsystemen der Frontscheibe der Frontscheibenreflex des Sendelichtstrahls 16 auf einen in Figur 1 und 2 nicht dargestellten weiteren Lichtempfänger geführt und damit bei jedem Durchlauf gegebenenfalls zeitlich gemittelt auf seine Intensität ausgewertet werden kann. Dafür kann sogar das Verschmutzungsprüfsystem in Doppelfunktion mit genutzt werden.

Die übrigen fünf Aufgaben 1-5 lassen sich durch Auswertung des internen optischen Testsignals des Testlichtsenders 38 erfüllen. Der Testlichtsender 38 sollte spektral und zeitlich dem Lichtsender 12 ähnlich genug sein, dass im Empfangspfad ein auswertbares Signal erzeugt wird. Der Testlichtsender 38 muss nicht besonders leistungsstark sein, da sein Licht direkt oder zumindest mit sehr kurzen Lichtwegen innerhalb des Laserscanners 10 eingestrahlt wird. Dafür genügt eine einfache Laserdiode, ein relativ schwacher VCSEL oder auch eine LED. Das Zeitverhalten des Testlichtsenders 38 ist vor allem bei dem schon angesprochenen Verfahren gemäß EP 2 482 094 B1 wichtig, damit die Analogelektronik des Schwingkreises mit ihren Bandpasseigenschaften entsprechend angeregt wird.

Die Einbeziehung der Ablenkeinheit 18 in den Strahlengang des Testlichtsenders 38 erlaubt die Überprüfung der Justierung des Systems und zumindest eine grobe Überwachung der Scanfeldebenheit, wobei letzteres auch von der herkömmlichen Referenzzielmessung allenfalls grob überprüft wurde.

Der Triggerzeitpunkt des Testlichtsenders 38 legt nun die Position des Testsignals 54a-b im Signalfenster fest (vgl. nochmals Figur 4). Bei kurzer Pulslänge und ausreichendem Totbereich 58 kann dies vor dem für den Schutzbereich relevanten Zeitbereich sein. Bei Verwendung eines Schwingkreises im Analogteil muss die Verlängerung des Testsignals 54a beachtet werden. Diese anfängliche zeitliche Position ist wegen der prinzipiell ausgeschlossenen Wechselwirkung mit dem Messsignal 56 bevorzugt. Andernfalls kann das Testsignal 54b hinter den Schutzbereich 60 gelegt werden, also in ein Zeitintervall, das die Laufzeit des Lichts bis zur maximalen Schutzfeldgrenze und zurück überschreitet. Sollte sich hier noch ein Echo oder Nachhall eines Messsignals 56 befinden, kann wieder auf den vorderen Totbereich 58 ausgewichen werden, da in diesem Fall offensichtlich kein Messsignal 56 im kurzen Abstand vorliegt. Eine adaptive Anpassung, mit der sich Test und Messung einander ausweichen, ist ein Vorteil dieses Verfahrens, da dies mit einem starren Winkelbereich einer Totzone nicht möglich wäre und es dort keinen vergleichbaren Freiheitsgrad gibt. Ein zusätzlicher Freiheitsgrad ist die Amplitude des Testsignals. Durch die Einstellparameter des Testlichtsenders 38 können verschiedene Referenzzieltypen wie hell, dunkel oder zeitlich unterschiedlich realisiert werden. Herkömmlich waren dafür jeweils eigene Referenzziele oder Referenzzielbereiche erforderlich.

## Patentansprüche

1. Entfernungsmessender Laserscanner (10), der einen Lichtsender (12) zum Aussenden eines Lichtsignals (16) in einen Überwachungsbereich (20), einen Lichtempfänger (26) zum Erzeugen eines Empfangssignals aus dem von Objekten in dem Überwachungsbereich (20) remittierten Lichtsignal (22), eine bewegliche Ablenkeinheit (18) zur periodischen Ablenkung des Lichtsignals (16, 22), um im Verlauf der Bewegung den Überwachungsbereich (20) abzutasten, und eine Auswertungseinheit (34) zur Erfassung und Entfernungsbestimmung der Objekte anhand der Lichtlaufzeit zwischen Aussenden und Empfang des Lichtsignals (16, 22) und zum Testen eines Testlichtpfades anhand eines Testlichtsignals (40, 54a-b) aufweist, wobei der Test eine fehlerfreie Funktion der Entfernungsmessung sicherstellt,
wobei der Laserscanner (10) einen Testlichtsender (38) zum Erzeugen des Testlichtsignals (40, 54a-b) aufweist, wobei der Testlichtsender (38) derart ausgerichtet ist, dass das Testlichtsignal (40) innerhalb des Laserscanners (10) zu dem Lichtempfänger (26) gelangt, so dass das Testlichtsignal intern bleibt, **dadurch gekennzeichnet,**
**dass** die Auswertungseinheit (34) dafür ausgebildet ist, Objekte auch in Winkelstellungen der Ablenkeinheit (18) zu erfassen, in denen der Testlichtpfad getestet wird.

2. Laserscanner (10) nach Anspruch 1,
wobei das Testlichtsignal (40) direkt oder über ein streuendes Objekt innerhalb eines Gehäuses des Laserscanners (10) oder über die Ablenkeinheit (18) zu dem Lichtempfänger (26) gelangt.

3. Laserscanner (10) nach Anspruch 1 oder 2,
wobei der Testlichtsender (38) derart ausgerichtet ist, dass das Testlichtsignal (40) zusätzlich innen an einer Frontscheibe (44) des Laserscanners (10) reflektiert wird.

4. Laserscanner (10) nach einem der vorhergehenden Ansprüche,
wobei die Auswertungseinheit (34) dafür ausgebildet ist, ein Testlichtsignal (40, 54a-b) des Testlichtsenders (38) zu einem Zeitpunkt auszulösen, bei dem das Testlichtsignal (54a-b) in dem Empfangssignal zeitlich versetzt zu dem Lichtsignal (56) erfasst wird.

5. Laserscanner (10) nach Anspruch 4,
wobei der Zeitpunkt einem zeitlichen Totbereich (58) am Anfang oder Ende einer Messung entspricht.

6. Laserscanner (10) nach Anspruch 4 oder 5,
wobei die Auswertungseinheit (34) dafür ausgebildet ist, den Zeitpunkt im Verlauf der Bewegung der Ablenkeinheit (18) dynamisch anzupassen.

7. Laserscanner (10) nach einem der vorhergehenden Ansprüche,
wobei die Auswertungseinheit (34) dafür ausgebildet ist, die Amplitude des Testlichtsignals (40, 54a-b) zu variieren.

8. Laserscanner (10) nach einem der vorhergehenden Ansprüche,
der einen A/D-Wandler (34) und einen Speicher (34) aufweist, um das Empfangssignal zu digitalisieren und für eine nachfolgende Auswertung (34) aufzuzeichnen.

9. Laserscanner (10) nach einem der vorhergehenden Ansprüche,
wobei die Auswertungseinheit (34) dafür ausgebildet ist zu testen, ob das Testlichtsignal (40, 54a-b) mit einer erwarteten Mindestamplitude und/oder in einer erwarteten Winkelposition der Ablenkeinheit (18) empfangen wird.

10. Laserscanner (10) nach einem der vorhergehenden Ansprüche,
der einen Testlichtempfänger aufweist, welcher derart angeordnet ist, dass darin direkt oder nach Reflexion an einer Frontscheibe (44) des Laserscanners (10) ein Teil des Lichtsignals (16) empfangen wird.

11. Laserscanner (10) nach einem der vorhergehenden Ansprüche,
wobei der Laserscanner (10) eine Sockeleinheit (48) und eine von einer Frontscheibe (44) getragene Deckeleinheit (46) aufweist, und wobei die Ablenkeinheit (18) in der Deckeleinheit (46) gehaltert ist.

12. Laserscanner (10) nach einem der vorhergehenden Ansprüche,
wobei eine Winkelmesseinheit (30, 32) zur Erfassung der Winkelstellung der Ablenkeinheit (18) vorgesehen ist.

13. Laserscanner (10) nach Anspruch 12,
wobei die Auswertungseinheit (34) dafür ausgebildet ist, die Lichtlaufzeit anhand eines Zeitpunkts zu korrigieren, zu dem das Testlichtsignal (54, 54ab) empfangen wird.

14. Laserscanner (10) nach einem der vorhergehenden Ansprüche,
der als Sicherheitslaserscanner ausgebildet ist und einen Sicherheitsausgang (36) aufweist, wobei die Auswertungseinheit (34) dafür ausgebildet ist zu bestimmen, ob sich ein Objekt in einem Schutzfeld innerhalb des Überwachungsbereichs (20) befindet, und daraufhin ein sicherheitsgerichtetes Abschaltsignal über den Sicherheitsausgang (36) auszugeben.

15. Verfahren zur sicheren Erfassung und Entfernungsbestimmung von Objekten in einem Überwachungsbereich (20) mit einem Laserscanner (10), bei dem von einem Lichtsender (12) ein Lichtsignal (16) in den Überwachungsbereich (20) ausgesandt und in einem Lichtempfänger (26) ein Empfangssignal aus dem von Objekten in dem Überwachungsbereich (20) remittierten Lichtsignal (22) gebildet wird, wobei der Überwachungsbereich (20) durch periodische Ablenkung des Lichtsignals (16, 22) an einer beweglichen Ablenkeinheit (18) abgetastet wird, die Objekte anhand des Empfangssignals erfasst werden, die Entfernung aus der Lichtlaufzeit zwischen Aussenden und Empfang des Lichtsignals (16, 22) bestimmt wird und ein Testlichtpfad anhand eines Testlichtsignals (40, 54a-b) getestet wird, um eine fehlerfreie Funktion der Entfernungsmessung sicherzustellen,
wobei das Testlichtsignal (40, 54a-b) mit einem Testlichtsender (38) erzeugt wird, das innerhalb des Laserscanners (10) zu dem Lichtempfänger (26) gelangt, so dass das Testlichtsignal intern bleibt, **dadurch gekennzeichnet, dass** Objekte auch in Winkelstellungen der Ablenkeinheit (18) erfasst werden, in denen der Testlichtpfad getestet wird.

## Claims

1. A distance measuring laser scanner (10) comprising a light transmitter (12) for transmitting a light signal (16) into a monitored zone (20), a light receiver (26) for generating a received signal from the light signal (22) remitted by objects in the monitored zone (20), a movable deflection (18) unit for the periodic deflection of the light signal (16, 22) to scan the monitored zone (20) in the course of the movement, and an evaluation unit (34) for detecting the objects and for determining their distance based on the time of flight of light between the transmission and the reception of the light signal (16, 22) with reference to the received signal, and for testing a test light path based on a test light signal (40, 54a-b), the test ensuring an error-free function of the distance measurement, wherein the laser scanner(10) comprises a test light transmitter (38) for generating the test light signal (40, 54a-b), wherein the test light transmitter (38) is orientated such that the test light signal (40) moves within the laser scanner (10) to the light receiver (26), so that the test signal stays internal,
**characterized in that** the evaluation unit (34) is configured also to detect objects in angular positions of the deflection unit (18) in which the test light path is tested.

2. The laser scanner (10) in accordance with claim 1,
wherein test light signal (40) moves directly or via a scattering object within a housing of the laser scanner (10) or via the deflection unit (18) to the light receiver (26).

3. The laser scanner (10) in accordance with claim 1 or 2,
wherein the test light transmitter (38) is orientated such that the test light signal (40) is additionally internally reflected at a front screen (44) of the laser scanner (10).

4. The laser scanner (10) in accordance with any of the preceding claims,
wherein the evaluation unit (34) is configured to trigger a test light signal (40, 54a-b) of the test light transmitter (38) at a point in time in which the test light signal (54a-b) is detected in the received signal at a time offset from the light signal (56).

5. The laser scanner (10) in accordance with claim 4,
wherein the point in time corresponds to a temporal dead zone (58) at the start or at the end of a measurement.

6. The laser scanner (10) in accordance with claim 4 or 5,
wherein the evaluation unit (34) is configured to adapt the point in time dynamically in the course of the movement of the deflection unit (18).

7. The laser scanner in accordance with any of the preceding claims,
wherein the evaluation unit (34) is configured to vary the amplitude of the test light signal (40, 54a-b).

8. The laser scanner (10) in accordance with any of the preceding claims,
further comprising an A/D converter (34) and a memory (34) to digitize the received signal and to record it for a following evaluation (34).

9. The laser scanner (10) in accordance with any of the preceding claims,
wherein the evaluation unit (34) is configured to test whether the test light signal (40, 54a-b) is received at an expected minimum amplitude and/or in an expected angular position of the deflection unit (18).

10. The laser scanner (10) in accordance with any of the preceding claims, further comprising a test light receiver which is arranged such that a portion of the light signal (16) is received therein directly or after reflection at a front screen (44) of the laser scanner (10).

11. The laser scanner (10) in accordance with any of the preceding claims,
wherein the laser scanner (10) has a base unit (48) and a top unit (46) supported by a front screen (44), and wherein the deflection unit (18) is held in the top unit (46).

12. The laser scanner (10) in accordance with any of the preceding claims,
Wherein an angle measurement unit (30, 32) for detecting the angular position of the deflection unit (18) is provided.

13. The laser scanner (10) in accordance with claim 12,
wherein the evaluation unit (34) is configured to correct the time of flight of light with reference to a point in time at which the test light signal (54, 54a-b) is received.

14. The laser scanner (10) in accordance with any of the preceding claims,
which is configured as a safety light scanner and has a safety output (36), with the evaluation unit (34) being configured to determine whether an object is located in a protected field within the monitored zone (20) and thereupon to output a safety-directed shut-down signal via the safety output (36).

15. A method for the safe detection of objects in a monitored zone (20) with a laser scanner (10), wherein a light signal (16) is transmitted by a light transmitter (12) into the monitored zone 20) and a received signal is formed in a light receiver (26) from the light signal (22) remitted by objects in the monitored zone (20), wherein the monitored zone (20) is scanned by periodic deflection of the light signal (16, 22) at a movable deflection unit (18), the objects are detected with reference to the received signal, the distance is determined from a time of flight of light between the transmission and the reception of the light signal (16, 22) and a test light path is tested based on a test light signal (40, 54a-b) in order to ensure an error-free function of the distance measurement, wherein the test light signal (40, 54a-b) is generated by a test light transmitter (38) and moves to the light receiver (26) within the laser scanner (10), so that the test signal stays internal,
**characterized in that** objects are also detected in angular positions of the deflection unit (18) in which the signal path is tested.

## Revendications

1. Scanner à laser (10) pour mesure de distance qui comprend un émetteur de lumière (12) pour émettre un signal lumineux (16) vers une zone de surveillance (20), un récepteur de lumière (26) pour engendrer un signal de réception à partir du signal lumineux (22) réémis par des objets dans la zone de surveillance (20), une unité de déflexion mobile (18) pour la déflexion périodique du signal lumineux (16, 22) afin de palper au cours du déplacement la zone de surveillance (20), et une unité d'évaluation (34) pour la détection et la détermination de distance des objets au moyen du temps de parcours de la lumière entre l'émission et la réception du signal lumineux (16, 22) et pour tester un trajet de lumière test au moyen d'un signal de lumière test (40, 54a-b), dans lequel le test garantit une fonction sans erreur de la mesure de distance,
dans lequel le scanner à laser (10) comprend un émetteur de lumière test (38) pour engendrer le signal de lumière test (40, 54a-b), dans lequel l'émetteur de lumière test (38) est orienté de telle façon que le signal de lumière test (40) parvient à l'intérieur du scanner à laser (10) vers le récepteur de lumière (26), de sorte que le signal de lumière test reste interne,
**caractérisé en ce que** l'unité d'évaluation (34) est réalisée pour détecter des objets également dans des positions angulaires de l'unité de déflexion (18) dans lesquelles le trajet de lumière test est testé.

2. Scanner à laser (10) selon la revendication 1,
dans lequel le signal de lumière test parvient au récepteur de lumière (26) soit directement soit via un objet diffusant à l'intérieur d'un boîtier du scanner à laser (10) soit encore via l'unité de déflexion (18).

3. Scanner à laser (10) selon la revendication 1 ou 2,
dans lequel l'émetteur de lumière test (38) est orienté de telle façon que le signal de lumière test (40) est réfléchi en supplément à l'intérieur au niveau d'une plaque frontale (44) du scanner à laser (10).

4. Scanner à laser (10) selon l'une des revendications précédentes,
dans lequel l'unité d'évaluation (34) est réalisée pour déclencher un signal de lumière test (40, 54a-b) de l'émetteur de lumière test (38) à un instant auquel le signal de lumière test (54a-b) dans le signal de réception est détecté avec un décalage temporel par rapport au signal lumineux (56).

5. Scanner à laser (10) selon la revendication 4,
dans lequel l'instant correspond à une plage temporelle morte (58) au début ou à la fin d'une mesure.

6. Scanner à laser (10) selon la revendication 4 ou 5,
dans lequel l'unité d'évaluation (34) est réalisée pour adapter de manière dynamique l'instant au cours du déplacement de l'unité de déflexion (18).

7. Scanner à laser (10) selon l'une des revendications précédentes,
dans lequel l'unité d'évaluation (34) est réalisée pour faire varier l'amplitude du signal de lumière test (40, 54a-b).

8. Scanner à laser (10) selon l'une des revendications précédentes,
qui comprend un convertisseur analogique/numérique (34) et une mémoire (34), pour numériser le signal de réception et pour l'enregistrer en vue d'une évaluation ultérieure (34).

9. Scanner à laser (10) selon l'une des revendications précédentes,
dans lequel l'unité d'évaluation (34) est réalisée pour tester si le signal de lumière test (40, 54a-b) est reçu avec une amplitude minimum attendue et/ou dans une position angulaire attendue de l'unité de déflexion (18).

10. Scanner à laser (10) selon l'une des revendications précédentes, qui comprend un récepteur de lumière test, lequel est agencé de telle façon qu'une partie du signal lumineux (16) est reçue dans celui-ci soit directement soit après réflexion au niveau d'une plaque frontale (44) du scanner à laser (10).

11. Scanner à laser (10) selon l'une des revendications précédentes,
dans lequel le scanner à laser (10) comprend une unité formant socle (48) et une unité formant couvercle (46) portée par une plaque frontale (44), et dans lequel l'unité de déflexion (18) est retenue dans l'unité formant couvercle (46).

12. Scanner à laser (10) selon l'une des revendications précédentes,
dans lequel il est prévu une unité de mesure angulaire (30, 32) pour détecter la position angulaire de l'unité de déflexion (18).

13. Scanner à laser (10) selon la revendication 12,
dans lequel l'unité d'évaluation (34) est réalisée pour corriger le temps de parcours de la lumière en se référant à un instant auquel le signal de lumière test (54, 54-a-b) est reçu.

14. Scanner à laser (10) selon l'une des revendications précédentes,
qui est réalisé sous forme de scanner à laser de sécurité et comprend une sortie de sécurité (36), et l'unité d'évaluation (34) est réalisée pour déterminer si un objet se trouve dans un champ protégé à l'intérieur de la zone de surveillance (20) et pour délivrer suite à cela un signal de coupure à fonction de sécurisation via la sortie de sécurité (36).

15. Procédé pour détecter de manière sûre et déterminer la distance d'objets dans une zone de surveillance (20) avec un scanner à laser (10) dans lequel un signal lumineux (16) est émis par un émetteur de lumière (12) vers la zone de surveillance (20) et un signal de réception est formé dans un récepteur de lumière (26) à partir du signal lumineux (22) réfléchi par des objets dans la zone de surveillance (20), dans lequel la zone de surveillance (20) est palpée par déflexion périodique du signal lumineux (16, 22) au niveau d'une unité de déflexion mobile (18), les objets sont détectés au moyen du signal de réception, l'éloignement est déterminé à partir du temps de parcours de la lumière entre l'émission et la réception du signal lumineux (16, 22), et un trajet de lumière test est testé au moyen d'un signal de lumière test (40, 54a-b), afin de garantir une fonction sans erreur de la mesure de distance,
dans lequel le signal de lumière test (40, 54a-b) est engendré avec un émetteur de lumière test (38) qui parvient, à l'intérieur du scanner à laser (10), au récepteur de lumière (26) de telle sorte que le signal de lumière test reste interne,
**caractérisé en ce que** des objets sont également détectés dans des positions angulaires de l'unité de déflexion (18) dans lesquelles le trajet de lumière test est testé.
